Europäisches Patentamt

(19) European Patent Office     (11) Publication number:    **0 169 422**

Office européen des brevets                              **B1**

(12)              **EUROPEAN PATENT SPECIFICATION**

(45) Date of publication of patent specification: **13.06.90**     (51) Int. Cl.⁵: **G 21 C 3/10**

(21) Application number: **85108360.0**

(22) Date of filing: **05.07.85**

(54) Fuel rod for a nuclear reactor having improved end plugs.

(30) Priority: **26.07.84 US 634728**

(43) Date of publication of application:
**29.01.86 Bulletin 86/05**

(45) Publication of the grant of the patent:
**13.06.90 Bulletin 90/24**

(84) Designated Contracting States:
**BE DE FR GB IT SE**

(56) References cited:
**FR-A-2 045 788**
**FR-A-2 245 055**
**US-A-3 141 830**

(73) Proprietor: **WESTINGHOUSE ELECTRIC CORPORATION**
**Westinghouse Building Gateway Center**
**Pittsburgh Pennsylvania 15222 (US)**

(72) Inventor: **Wilson, John Francis**
**3560 Meadowgate Drive**
**Murrysville Pennsylvania 15668 (US)**
Inventor: **Gjertsen, Robert Kenneth**
**126 Penn Lear Drive**
**Monroeville Pennsylvania 15146 (US)**
Inventor: **Cerni, Samuel**
**101 Kingsdale Road**
**Pittsburgh Pennsylvania 15221 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

## Description

The present invention relates generally to fuel assemblies for nuclear reactors and, more particularly, to a nuclear fuel rod having an improved end plug assembly.

As well known in the art, a fuel rod for use in fuel assemblies of a nuclear reactor includes a plurality of cylindrical nuclear fuel pellets, such as pellets composed of $UO_2$ enriched with U-235, disposed end-to-end within a tubular cladding member which is an elongate thin-walled tube, preferably of a zirconium alloy, having its opposite ends closed by means of end plugs formed preferably of the same material as the cladding tube.

Likewise as well known, the overall efficiency of a nuclear reactor can be increased and the useful life of its fuel rods prolonged if the fuel rods are internally pressurized. Thus, during fabrication of a fuel rod, an inert gas, such as helium, is introduced into the fuel tube under pressure after which the end plugs are welded in the tube ends so as to seal the tube. During operation of the nuclear reactor, the internal pressure of the tube increas due to the generation of gases, and it may reach as high as $6,8 \cdot 10^6$ Pascal (68 atmospheres) toward the end of the life of the fuel rod.

During operation of the reactor, the higher pressure of the coolant (approximately $1,7 \cdot 10^7$ Pascal or 170 atmospheres) on the exterior of the fuel rods normally offsets the internal pressure of the fuel rods. However, during shut down of the reactor, the external pressure of the coolant decreases to zero, whereupon the internal pressure of the fuel rod causes outward expansion of the tube. With a fuel rod having a solid end plug inserted into the fuel tube end and welded thereto at the juncture of the tube end and the plug periphery, such outward expansion of the tube results in the location of a stress riser and the concentration of the point of maximum discontinuity stress at the weld joint. As long as the tube material and stresses are within the fatigue life limits, the weld joint will not fail. However, if the weld is imperfect or the material looses ductility due to hydriding and/or irradiation hardening, the weld joint may fail.

One solution is to form a cavity within the end plug to provide extra space for fission gas buildup. Examples of an end plug defined in this manner are disclosed in US-A-3 679 545, US-A-3 141 830 and FR-A-2 245 055. The interior cavity formed in the prior art end plugs is simply a central cylindrical bore extending through an inner body portion of the end plug which is fitted within the adjacent end portion of the fuel tube, and partly through an outer body portion of the end plug which extends outwardly of the tube and has a maximum outside diameter substantially equal to the outside diameter of the tube while said inner body portion has a smaller outside diameter. The weld joint is formed between the fuel tube end and the wall of the end plug surrounding said internal cavity. This design embodies advantages from a stress standpoint as well as a welding standpoint. From the stress standpoint, additional space provided by the cavity in the end plug reduces the pressure of gas buildup and thereby relieves expansion of the fuel tube to some degree during reactor shutdown. Moreover, and although this design has the same discontinuity stress, the stress riser due to the end plug-to-fuel tube junction does not occur at the point of maximum discontinuity stress since the latter is located farther outwardly along the end plug within the cavity. Therefore, the maximum discontinuity stress is not increased by a stress concentration factor as was the case in the solid end plug design. From the welding standpoint, parts of approximately equal thicknesses are easier to weld together than parts which have a large difference in their respective thicknesses.

However, some of the advantages of this known design are offset by the substitution of ceramic pellets for some of the fuel pellets done for the purpose of thermally insulating the end plug from the fuel pellets. These ceramic pellets take up valuable fuel pellet space in the fuel tube.

It is the principle object of the invention to provide a fuel rod having improved end plugs which enable the fuel rod to accommdate fission gas buildup without increasing the length of the fuel rod or removing fuel pellets.

With this object in view, the invention resides in a fuel rod as characterized in claim 1.

Thus, the or each end plug of the fuel rod embodying the invention has its internal cavity designed in such a manner as to maximize fission gas space and providing a smooth contour in the region of maximum discontinuity stresses which distributes them over a broader area. Furthermore, the end plug has a reduced wall thickness at the region of the undercut cavity which provides a certain amount of flexibility alleviating concentration of high stress at the weld joint.

A further problem of the above mentioned prior art design is that it fails to make provision for preventing fuel pellet chips from falling into the end plug cavity at the lower end of the vertically positioned fuel rod. Chips in the end plug cavity cause an additional problem of how to remove the heat generated by them from the end plug.

The further development of the fuel rod according to the invention as characterized in the subclaims overcomes that problem by including an insert which keeps nuclear fuel chips out of the cavity but permits gas flow communication between the latter and the interior of the fuel tube.

Preferred embodiments of the invention will now be described, by way of example only, with reference to the accompanying drawings, in which:

Fig. 1 is a partially sectioned elevational view, with parts being broken away for clarity, of a nuclear fuel assembly including fuel rods;

Fig. 2 is an enlarged, fragmentary sectional view of one of the fuel rods embodying the invention;

Fig. 3 is an enlarged perspective view of an insert as employed with the fuel rod of Fig. 2; and

Fig. 4 is a fragmentary sectional view of a lower end portion of a fuel rod representing a further embodiment of the invention.

In the following description, like reference characters designate like or corresponding parts throughout the several views of the drawings, and terms such as "forward", "rearward", "left", "right", "upwardly", "downwardly", and the like are used as words of convenience not to be construed as limiting terms.

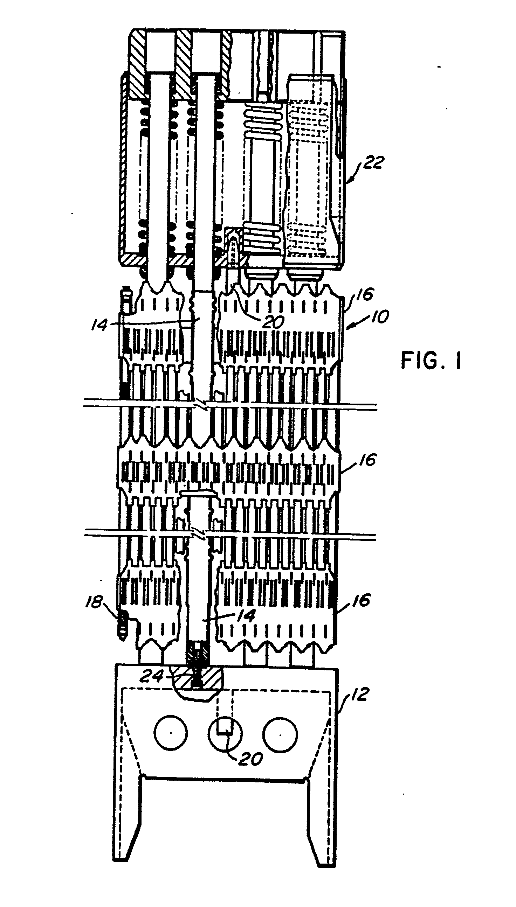

Referring now to the drawings, and particularly to Fig. 1, the fuel assembly illustrated therein and generally designated with the numeral 10 comprises a lower end structure or bottom nozzle 12 for supporting the assembly on the lower core plate (not shown) in the core region of a reactor (not shown); an organized array of control rod guide tubes or thimbles 14 projecting upward from the bottom nozzle 12; a plurality of transverse grids 16 axially spaced along the guide thimbles 14; a plurality of elongate fuel rods 18 (only one of which is shown for clarity) transversely spaced and axially supported by the grids 16; an instrumentation tube 20 located at the center of the fuel assembly 10; and, attached to the upper ends of the guide thimbles 14, an upper end structure or top nozzle 22 with hold-down means. It should be noted that, although the lower ends of the fuel rods 18 are shown herein as spaced above the bottom nozzle 12, they could rest and be supported thereon.

To form the fuel assembly 10, the transverse grids 16 are attached to the guide thimbles 14 at predetermined axially spaced locations; the fuel rods 18 are inserted from below through the grids 16; the lower nozzle 12 is then suitably affixed, such as by means of machine screws 24, to the lower ends of the guide thimbles; and then the top nozzle subassembly 22 is attached to the upper end portions of the guide thimbles 14. To control the fission process, a plurality of control rods (not shown) are reciprocally movable in the control rod guide thimbles 14 of the fuel assembly 10.

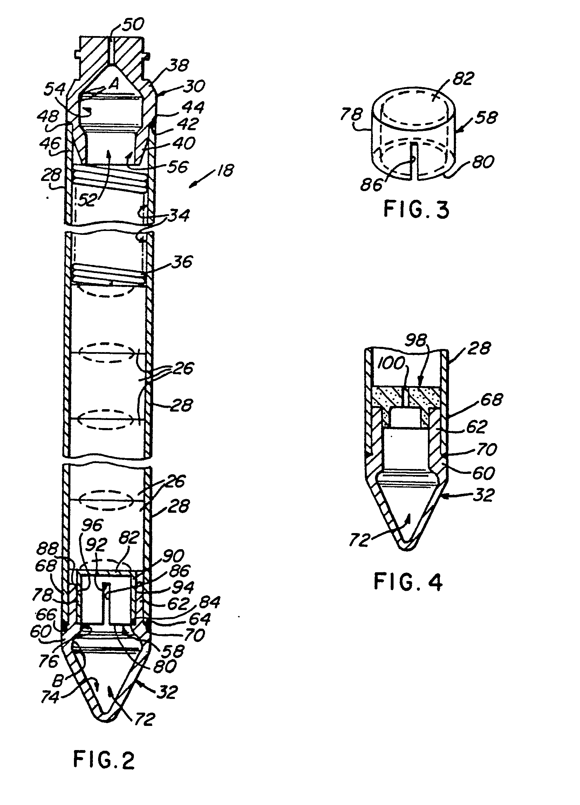

Referring now to Fig. 2, the nuclear fuel rod 18 shown therein comprises a tubular cladding member 28, and a plurality of cylindrical nuclear fuel pellets 26, such as UO enriched with U-235, disposed therein end-to-end. The cladding 28 is an elongate thin-walled tube, preferably of a zirconium alloy, having its opposite ends closed with end pugs 30 and 32 embodying the invention. Preferably, the end plugs 30, 32 are formed of the same material as the fuel tube 28, and they seal the nuclear fuel as well as an inert gas under pressure within the fuel tube 28. A plenum chamber 34 is provided within the fuel tube 28 between the stack of fuel pellets 26 and one of the end plugs, such as the upper end plug 30, and a helical spring 36 is disposed within the plenum chamber 34 to hold the pellets 26 compactly stacked and firmly in place against the other, i.e. the lower, end plug 32.

The upper end plug 30 of the improved end plug assembly comprises an outer body portion 38 with its maximum outside diameter substantially the same as the outer diameter of the fuel tube 28 to which the plug 30 is attached, and an inner body portion 40 with an outer diameter slightly less than the inner diameter of the tube 28. About the circumferential region of the plug 30 where the outer and inner body portions 38, 40 merge together, there is defined an external annular shoulder 42 against which the upper end 44 of the fuel tube 28 abuts when the upper end plug 30 is press-fitted into the upper end portion 46 of the fuel tube. A girth weld 48 rigidly connects and seals the upper end portion 46 of the tube 28 to the upper end plug 30 at the shoulder 42. An axial bore 50 extends through the end wall of the outer body portion 38. In a pressurized weld chamber, an inert gas is injected into the fuel tube 28 through the axial bore 50, whereupon the outer end of the bore is sealed by welding.

The upper end plug 30 is hollow, having therein a cavity 52 which increases the space for fission gas expansion from the plenum chamber 34. The outer region 54 of the cavity 52 within the outer body portion 38 is undercut relative to inner region 56 of the cavity within the inner body portion 40 so as to maximize the fission gas space in the end plug 30 and to locate the region A of maximum discontinuity stress outwardly from the stress riser created at the weld 48 upon reduced expansion of the fuel tube 28 during reactor shut down. Also, the internal contour of the upper end plug 30 defining the cavity 52 contains smooth transitions in the region of maximum discontinuity stresses, allowing a broader distribution of the stresses as opposed to concentration of them at one point. Additionally, the reduced wall thickness of the end plug 30 at the outer region 54 of the undercut cavity 52 provides a certain amount of flexibility in the end plug which alleviates concentration of high stress at the weld 48.

The end plug assembly embodying the invention includes further the lower end plug 32 and an insert 58. The lower end plug 32 basically comprises an outer body portion 60 having a generally V-shaped cross-sectional configuration, and an inner body portion 62 of a generally cylindrical shape having a reduced diameter relative to the maximum diameter of the outer body portion 60. The outer diameter of the inner body portion 62 is slightly less than the inside diameter of the fuel tube 28 such that, when the lower end plug 32 is press-fitted into the lower end portion 68 of the tube 28, the lower end 64 of the tube abuts an external annular shoulder 66 formed about the circumference of the lower end plug 32 at the region of merger between the outer 60 and inner 62 body portions 62, 64. A girth weld 70 joins and seals the end plug 32, at the shoulder 66, to the lower end portion 68 of the fuel tube 28.

Similar to the upper end plug 30, the lower end plug 32 is hollow having a cavity 72 which likewise increases the space for expansion of fission gas generated by the pellets 26. The outer region 74 of the cavity 72 within the outer body portion 60 is undercut relative to the inner region 76 of the cavity 72 within the inner body portion 62 so as to maximize the fission gas space in the lower end plug 32 and to locate the region B of maximum discontinuity stresses outwardly from the stress riser created at the weld 70 due to expansion of the fuel tube 28 during reactor shut down. Also, the internal contour of the lower end plug 32 defining the cavity 72 contains smooth transitions in the region of the maximum discontinuity stresses, thereby allowing a broader distribution of the stresses as opposed to concentration of them at one point. Additionally, the reduced wall thickness of the end plug 32 at the outer region 74 of the undercut cavity 72 provides a certain amount of flexibility in the lower end plug 32 which alleviates concentration of high stress at the weld 70.

The insert 58 associated with the lower end plug 32 is adapted to prevent fuel chips from falling from the fuel tube 28 into the cavity 72 of the lower end plug. As will be explained below, although the insert 58 is substantially closed at one end thereof to prevent entry of the fuel chips, it does have means enabling fission gas to pass from the fuel tube into the cavity 72 of the end plug.

In its preferred form shown in Figs. 2 and 3, the insert 58 has a cylindrical side wall 78 which is open at its lower or outer end 80, and an end wall 82 which connects with and closes the upper or inner end of the insert side wall and is disposed adjacent to the fuel pellets 26 contained within the fuel tube 28. The insert 58 is fit into the inner region 76 of the cavity 72 within the inner body portion 62 of the lower end plug 32, its open outer end 80 rotating on an internal annular ledge 84 formed within the end plug 32 adjacent the circumferential region of merger of the inner body portion 62 with the outer body portion 60.

The insert side wall 78 has a slightly larger outside diameter than the inside diameter of the inner body portion 62 of the lower end plug 32. Also, the side wall 78 has a slot 86 which splits the side wall in an axial direction. Due to this construction, when the insert 58 is inserted into the end plug 32, it is subject to a radial spring force which holds the insert 58 in place as the end plug 32 is being installed in the fuel tube 28.

The distance from the ledge 84 to the inner edge 88 of the end plug inner body portion 62 is less than the length of the slot 86 in the insert side wall 78 and the height of the side wall; thus, as seen in Fig. 2, an inner marginal edge portion 90 of the insert side wall 78 extends inwardly beyond the inner edge 88 of the inner body portion 62, and a corresponding inner end 92 of the slot 86 is exposed to the interior of the fuel tube 28. This creates a gap through which fission gas can expand into the cavity 72 in the lower end plug 32. Since the gas is under pressure, it can also pass into the cavity 72 between the external surface 94 of the insert side wall 86 and the internal surface 96 of the end plug inner body portion 62. The inner marginal edge portion 90 of the insert side wall 78 also maintains the adjacent fuel pellet 26 out of contact with the lower end plug 32 so as to minimize heat transfer thereto.

Fig. 4 depicts an alternate insert 98 adapted to be pressed into the inner region 76 of the cavity 72 within the inner body portion 62 of the lower end plug 32. The insert 98 is preferably formed from zirconium oxide material and has a small-diameter central opening 100 which allows passage of fission gases from the fuel tube 28 into the cavity 72 while preventing passage of fuel chips.

Since both inserts 58 and 98 fit within the lower end plug 32, they act to minimize end plug length which, in turn, maximizes active fuel and plenum length within the fuel tube 28. Also, use of either insert to space the adjacent pellet out of contact with the end plug makes it unnecessary to use ceramic pellets to thermally insulate the end plug from the fuel pellets. Thus, replacement of a fuel pellet is avoided. The extra fission gas space added by the use of the end plug assembly of the invention is approximately equivalent to the space occupied by one fuel pellet.

**Claims**

1. A nuclear fuel rod including a tubular member which contains nuclear fuel and gas under pressure, and which tubular member (28) has a pair of end plugs (30, 32) affixed to its opposite ends in sealing relationship with respect thereto, at least one of said end plugs (30, 32) having an inner body portion (40 or 62) which is fitted within an adjacent end portion of said tubular member (28), an outer body por (38 or 60) which extends outwardly of the tubular member and has a maximum outside diameter substantially equal to that of the tubular member, and an interior cavity (52 or 72) which communicates with the interior of the tubular member and includes an inner region (56 or 76) within said inner body portion and an outer region (54 or 74) within said outer body portion, characterized in that said outer region (54 or 74) of said cavity (52 or 72) is undercut relative to the inner region (56 or 76) of said cavity.

2. The nuclear fuel rod of claim 1, characterized in that the inner region (76) of said cavity (72) has fitted therein an insert (58 or 98) which permits gas flow communication between said tubular member (28) and the cavity while preventing nuclear fuel in the tubular member from entering said cavity (72).

3. The nuclear fuel rod of claim 2, characterized in that said insert (58) comprises a hollow cylindrical portion (78) fitted into said inner body portion (62) of the end plug (32), an inner end wall (82) substantially closing the cylindrical portion toward the interior of the tubular member (28), and opening means (92) permitting gas flow between the interior of the tubular member (28) and said cavity (72).

4. The nuclear fuel rod of claim 3, characterized in that said hollow cylindrical portion (78) has an inner margin (90) which extends inwards of the tubular member (28) beyond said inner body portion (62) of the end plug (32), and has formed therein a slot (86) which extends axially from the outer end of the cylindrical portion and into said inner margin thereof.

5. The nuclear fuel rod of claim 4, characterized in that said hollow cylindrical portion (78) having the axial slot (86) therein has an outer diameter which slightly exceeds the inner diameter of said inner body portion (62) prior to being fitted into the latter.

6. The nuclear fuel rod of any of claims 2 to 5, characterized in that said inner body portion (62) of the end plug (32) has an internal ledge (84) which axially supports said insert (58).

**Patentansprüche**

1. Kernbrennstab mit einem rohrförmigen Bauteil, welcher Kernbrennstoff und unter Druck stehendes Gas beinhaltet, und wobei das rohrförmige Bauteil (28) zwei Endkappen (30, 32) aufweist, die abdichtend an seinen gegenüberliegenden Enden befestigt sind, wobei wenigstens eine der Endkappen (30, 32) einen innenliegenden Kappenteil (40 oder 62) aufweist, der in einen angrenzenden Endteil des rohrförmigen Bauteils (28) eingepaßt ist, einen außenliegenden Kappenteil (38 oder 60) aufweist, der außerhalb des rohrförmigen Bauteils verläuft und einen maximalen Außendurchmesser aufweist, der im wesentlichen mit dem des rohrförmigen Bauteils gleich ist, und einen inneren einen Hohlraum (52 oder 72) aufweist, der mit dem Inneren des rohrförmigen Bauteils in Verbindung steht und einen Innenbereich (56 oder 76) im inneren Kappenteil und einen Außenbereich (54 oder 74) im äußeren Kappenteil aufweist, dadurch gekennzeichnet, daß der Außenbereich (54 oder 74) des Hohlraumes (52 oder 72) bezüglich des Innenbereiches (56 oder 76) des Hohlraumes hinterschnitten ist.

2. Kernbrennstab nach Anspruch 1, dadurch gekennzeichnet, daß der Innenbereich (76) des Hohlraumes (72) ein darin eingepaßtes Einsatzteil (58 oder 98) aufweist, welches eine Gasströmung zwischen dem rohrförmigen Bauteil (28) und dem Hohlraum ermöglicht, während der Kernbrennstoff im rohrförmigen Bauteil vom Austreten aus dem Hohlraum (72) gehindert wird.

3. Kernbrennstab nach Anspruch 2, dadurch gekennzeichnet, daß das Einsatzteil (58) einen hohlzylindrischen Teil (78) aufweist, der in den innenliegenden Kappenteil (62) der Endkappe (32) eingepaßt ist, eine innenliegende Abschlußwand (82) aufweist, die den zylindrischen Teil in Richtung des Inneren des rohrförmigen Bauteils (28) im wesentlichen abschließt, und eine Öffnung (92) aufweist, die die Gasströmung zwischen dem Inneren des rohrförmigen Bauteils (28) und dem Hohlraum (72) ermöglicht.

4. Kernbrennstab nach Anspruch 3, dadurch gekennzeichnet, daß der hohlzylindrische Teil (78) einen innenliegenden Randbereich (90) aufweist, der sich über den inneren Kappenteil (62) der Endkappe (32) hinaus in das rohrförmige Bauteil (28) erstreckt, und einen darin gebildeten Schlitz (86) aufweist, der axial vom äußeren Ende des zylindrischen Teiles bis in dessen innenliegenden Randbereich verläuft.

5. Kernbrennstab nach Anspruch 4, dadurch gekennzeichnet, daß der hohlzylindrische Teil (78) mit dem Axialschlitz (86) einen Außendurchmesser aufweist, der den Innendurchmesser des inneren Kappenteils (62) geringfügig übersteigt, bevor er in das letztere eingepaßt wird.

6. Kernbrennstab nach einem der Ansprüche 2 bis 5, dadurch gekennzeichnet, daß der innere Kappenteil (62) der Endkappe (32) einen inneren Verstärkungsrand (84) aufweist, der das Einsatzteil (58) axial abstützt.

**Revendications**

1. Barre de combustible nucléaire comprenant un élement tubulaire contenant du combustible nucléaire et du gaz sous pression, ledit élément tubulaire (28) étant muni d'une paire de bouchons d'extrémité (30, 32) assujettis de manière étanche à ses extrémités opposées, au moins l'un desdits bouchons d'extrémité (30, 32) comportant une partie de corps interne (40 ou 62) qui est montée à l'intérieur d'une partie d'extrémité adjacente dudit élément tubulaire (28), une partie de corps externe (38 ou 60) qui s'étend vers l'extérieur par rapport à l'élément tubulaire et dont le diamètre externe maximal est sensiblement égal à celui de l'élément tubulaire, et une cavité interne (52 ou 72) qui communique avec l'intérieur de l'élément tubulaire et comprend une zone interne (56 ou 76) située à l'intérieur de ladite partie de corps interne et une zone externe (54 ou 74) située à l'intérieur de ladite partie de corps externe, caractérisée en ce que ladite zone externe (54 ou 74) de ladite cavité (52 ou 72) est évidée par rapport à la zone interne (56 ou 76) de ladite cavité.

2. Barre de combustible nucléaire de la revendication 1, caractérisée en ce que dans la zone interne (76) de ladite cavité (72) est montée une pièce rapportée (58 ou 98) permettant à un flux de gaz de communiquer entre ledit élément tubulaire (28) et la cavité, tout en empêchant le combustible nucléaire situé dans l'élément tubulaire de pénétrer dans ladite cavité (72).

3. Barre de combustible nucléaire selon la revendication 2, caractérisée en ce que ladite pièce rapportée (58) comprend une partie cylindrique creuse (78) s'adaptant dans ladite partie de corps interne (62) du bouchon d'extrémité (32), une paroi d'extrémité extérne (82) fermant sensiblement la partie cylindrique vers l'intérieur de l'élément tubulaire (28), et des moyens d'ouverture (92) permettant un écoulement de gaz entre l'intérieur de l'élément tubulaire (28) et ladite cavité (72).

4. Barre de combustible nucléaire selon la revendication 3, caractérisée en ce que ladite partie cylindrique creuse (78) comporte une marge interne (90) s'étendant vers l'intérieur de l'élément tubulaire (28) au-delà de ladite partie de corps interne (62) du bouchon d'extrémité (32), et en ce qu'il y est formé une fente (86) s'étendant axialement depuis l'extrémité externe de la partie cylindrique jusque dans ladite marge interne de celle-ci.

5. Barre de combustible nucléaire selon la revendication 4, caractérisée en ce que ladite partie cylindrique creuse (78) comportant la fente axiale (86) a un diamètre externe qui est légèrement supérieur au diamètre interne de ladite partie de corps interne (62) avant d'être adaptée dans cette dernière.

6. Barre de combustible nucléaire selon l'une quelconque des revendications 2 à 5, caractérisée en ce que ladite partie de corps interne (62) du bouchon d'extrémité (32) comporte un rebord interne (84) qui supporte axialement ladite pièce rapportée (58).

FIG. I

FIG.2

FIG.3

FIG. 4

2